# EUROPÄISCHE PATENTSCHRIFT

(11) **EP 3 221 945 B1**
(45) Veröffentlichungstag und Bekanntmachung des Hinweises auf die Patenterteilung: **28.08.2019**
(21) Anmeldenummer: 15812996.5
(22) Anmeldetag: 09.12.2015
(51) Int. Cl.: H02J 3/28, H02J 3/32

(54) **VIRTUELLES KRAFTWERK MIT ÜBERGEORDNETEM AUSBALANCIEREN VON ELEKTRISCHEN ENERGIESPEICHERANLAGEN**
VIRTUAL POWER PLANT COMPRISING SUPERORDINATE BALANCING OF ELECTRICAL ENERGY STORAGE SYSTEMS
CENTRALE ÉLECTRIQUE VIRTUELLE À ÉQUILIBRAGE PRIORITAIRE DES INSTALLATIONS D'ACCUMULATION D'ÉNERGIE ÉLECTRIQUE

(30) Priorität: 15.01.2015 DE 102015200569
(43) Veröffentlichungstag der Anmeldung: 27.09.2017
(73) Patentinhaber: Siemens Aktiengesellschaft, 80333 München (DE)
(72) Erfinder: BETZIN, Christopher, 91301 Forchheim (DE); LEPIORZ, Matthias Simon, 91413 Neustadt a. d. Aisch (DE); WOLFSCHMIDT, Holger, 91058 Erlangen (DE)
(86) Internationale Anmeldenummer: PCT/EP2015/079099
(87) Internationale Veröffentlichungsnummer: WO 2016/113042

(56) Entgegenhaltungen:
- US-A1- 2014 009 117
- US-A1- 2014 025 218
- US-A1- 2014 379 151

## Beschreibung

Die vorliegende Erfindung betrifft ein System und ein Verfahren zur Pufferung von elektrischer Leistung, beziehungsweise elektrischer Energie für elektrische Verbraucher in Ausgestaltung eines virtuellen Speicherkraftwerks. Zuerst wird elektrische Energie gepuffert, und durch die Einstellung vorteilhafter Ladezustände elektrische Leistungsfähigkeit sichergestellt.

Im Zuge der Energiewende stieg in Deutschland zwischen den Jahren 2001 und 2011 die Stromerzeugung aus Windenergie um den Faktor 5 und aus Photovoltaik um den Faktor 150. Zur Angleichung zwischen der Stromerzeugung aus fluktuierenden, dezentralen Energiequellen und der Stromnachfrage werden vermehrt stationäre Energiespeicher eingesetzt. Aufgrund des zunehmenden Bedarfs an stationären Energiespeichern werden bis zum Jahr 2018 allein für Deutschland 100.000 installierte Heimbatteriesolarspeicher prognostiziert.

Für eine optimierte Nutzung der Speicherleistung einzelner Energiespeicher werden diese zu einem virtuellen Kraftwerk zusammengeschlossen.

Projekte zum Zusammenschluss von dezentral verteilten, elektrischen Energiespeichersystemen zu einem virtuellen Kraftwerk befinden sich zurzeit lediglich in der Vorentwicklung beziehungsweise in Versuchsstadien. Herkömmlich sind Balancing-Systeme auf Einzelspeichersystemebene oder Batteriemodulebene bekannt.

Aus der US 2014/0025218 A1 ist ein virtuelles Kraftwerk mit einem Elektrizitätswerk, mehreren in Häusern angeordneten Energieerzeugungseinrichtungen und mehreren Energiespeichern bekannt. Die mehreren Energiespeicher, die mehreren Energieerzeugungseinrichtungen und das Elektrizitätswerk sind untereinander mittels eines Stromnetzes zum Austausch von elektrischer Energie verbunden.

Die US 7,609,031 B2 offenbart ein Verfahren zum Balancieren von sekundären Lithiumzellen und Modulen. Es ist ein Batteriestapelsteuerungsmodul zum Balancieren einer Vielzahl von sekundären Lithiumzellen oder Gruppen von sekundären Lithiumzellen offenbart, die elektrisch in Serie geschaltet sind.

Die US 2013/0134943 A1 offenbart ein Verfahren zum Balancieren einer Batterie mit einer Vielzahl von parallel geschalteten Zweigen, wobei jeder Zweig zumindest zwei elektrochemische Zellen aufweist, die in Serie geschaltet sind.

Die WO 2012/130400 A1 offenbart eine Schaltungsanordnung zum Austausch elektrischer Ladung zwischen den inneren Zellen einer Akkublockanordnung, wobei ein Akkublock über seine äußeren Anschlussklemmen mit einer Vielzahl von Akkublöcken in einer Akkublockanordnung zusammengeschaltet ist.

Es ist Aufgabe der vorliegenden Erfindung ein System und ein Verfahren zur Bereitstellung von elektrischer Leistung für elektrische Verbraucher in Ausgestaltung eines virtuellen Speicherkraftwerks als ein Puffer zwischen, insbesondere fluktuierenden und dezentralen, Energiequellen und elektrischen Verbrauchern derart bereit zu stellen, dass die elektrische Leistungen von verwendeten elektrischen Energiespeicheranlagen optimal genutzt und diese nicht von einem Kraftwerksnetz abgetrennt werden, so dass deren Leistungsbereitschaft uneingeschränkt zu jeder Zeit verfügbar bleibt.

Die Aufgabe wird durch ein virtuelles Kraftwerksystem gemäß dem Hauptanspruch und ein Verfahren zum Betrieb eines virtuellen Kraftwerksystems gemäß dem Nebenanspruch gelöst.

Gemäß einem ersten Aspekt wird ein virtuelles Kraftwerksystem zur Pufferung elektrischer Leistung, insbesondere Regelleistung, für elektrische Verbraucher vorgeschlagen, aufweisend eine Mehrzahl von räumlich verteilten elektrischen Energiespeicheranlagen, die mittels eines elektrischen Kraftwerknetzes elektrisch aneinander angeschlossen, beziehungsweise miteinander verbunden sind, wobei eine Messvorrichtung zur Erfassung der Ladezustände aller Energiespeicheranlagen für eine Regelungsvorrichtung zur Einstellung aller Ladezustände zwischen einer unteren Ladezustandsgrenze GU und einer oberen Ladezustandsgrenze GO geschaffen ist, wobei die Einstellung aller Ladezustände mittels eines Ladungsausgleiches ausgeführt wird, bei dem mittels eines Ausbalancierens elektrische Ausgleichsladungen von Energiespeicheranlagen mit relativ hohem Ladezustand zu Energiespeicheranlagen mit relativ niedrigem Ladezustand mittels des elektrischen Kraftwerknetzes übertragen werden.

Gemäß einem zweiten Aspekt wird ein Verfahren zum Betrieb eines virtuellen Kraftwerksystems zur Pufferung elektrischer Energie und damit zur Sicherstellung elektrischer Leistungsfähigkeit, insbesondere Regelleistung, für elektrische Verbraucher, aufweisend eine Mehrzahl von räumlich verteilten elektrischen Energiespeicheranlagen vorgeschlagen, die mittels eines elektrischen Kraftwerksnetzes elektrisch aneinander angeschlossen, beziehungsweise miteinander verbunden sind, wobei eine Messungsvorrichtung zur Erfassung der Ladezustände aller Energiespeicheranlagen für eine Regelungsvorrichtung zur Einstellung aller Ladezustände zwischen einer unterlagen Ladezustandsgrenze GU und einer oberen Ladezustandsgrenze GO geschaffen ist, wobei die Einstellung aller Ladezustände mittels eines Ladungsausgleiches ausgeführt wird, bei dem mittels eines Ausbalancierens elektrische Ausgleichsladungen von Energiespeicheranlagen mit relativ hohem Ladezustand zu Energiespeicheranlagen mit relativ niedrigem Ladezustand mittels des elektrischen Kraftwerksnetz übertragen werden.

Ein virtuelles Kraftwerk kann ein scheinbares Kraftwerk sein, wobei eine Mehrzahl von dezentralen elektrischen Energiespeicheranlagen mittels eines elektrischen Kraftwerksnetzes elektrisch miteinander verknüpft ist und eine elektrische Leistung, insbesondere Regelleistung, für elektrische Verbraucher bereitstellen kann. Grundsätzlich kann ein virtuelles Kraftwerk ebenso ein Verbund von elektrischen Verbrauchern, Erzeugern und Speichern sein, die alle zusammen zentral angesteuert werden.

Eine elektrische Energiespeicheranlage kann beispielsweise ein Heimbatteriesolarspeicher sein, der selbst generierte Solarenergie speichern kann. Grundsätzlich sind alle Energiespeicheranlagen verwendbar, die, insbesondere regenerativ erzeugte, elektrische Energie speichern oder zwischenspeichern können. Jeder Energiespeicheranlage kann eine Energiequelle, insbesondere dezentrale regenerative Energiequelle, zugeordnet sein, die die Energiespeicheranlage lädt. Jeder Energiespeicheranlage kann ein elektrischer Verbraucher zugeordnet sein, der die Energiespeicheranlage entlädt.

Pufferung bedeutet hier insbesondere ein Angleichen oder Anpassen der elektrischen Leistung aus Energiequellen, insbesondere aus fluktuierenden, dezentralen Energiequellen, an die elektrische Leistung eines Leistungsversorgungsnetzes, an das elektrische Verbraucher elektrisch angeschlossen sind. Dies betrifft insbesondere eine Leistungspufferung, bei der elektrische Leistung entnommen beziehungsweise hinzugefügt wird, je nachdem wie ein Leistungsbedarf ist.

Das Kraftwerksnetz des virtuellen Kraftwerks kann Teil des Leistungsversorgungsnetzes für elektrische Verbraucher sein. Mittels des Leistungsversorgungsnetzes kann elektrische Leistung, insbesondere eine in Amplitude und Frequenz bestimmte Regelleistung, den elektrischen Verbrauchern bereitgestellt werden.

Die Messungsvorrichtung zur Erfassung der Ladezustände aller Energiespeicheranlagen und die Regelungsvorrichtung zur Einstellung aller Ladezustände sind den Energiespeicheranlagen und den elektrischen Leitungen übergeordnet.

Für eine optimierte Nutzung der Speicherleistung einzelner Energiespeicheranlagen werden diese zu einem virtuellen Kraftwerk zusammengeschlossen. Der Zusammenschluss der dezentral verteilten, elektrischen Energiespeichersysteme zu einem virtuellen Kraftwerk nutzt übergeordnete Steuer- und Regelvorgaben aus einer übergeordneten Regelungsvorrichtung. Es ist erkannt worden, dass die Bereitstellung von Speicherleistungen des virtuellen Kraftwerks, wie zum Beispiel Regelleistung, nicht zu jeder Zeit im gleichen Maß möglich ist. Aufgrund variierender Standort- und Umweltbedingungen, beispielsweise der Menge vor Ort installierter, beziehungsweise erbrachter Leistung aus regenerativer Energieerzeugung oder einem individuellen variierenden Eigenenergieverbrauch, der dezentral verteilten, elektrischen Energiespeicheranlagen variieren deren Ladezustände (SOC). Unterschreiten einzelne Energiespeicheranlagen oder Energiespeichersysteme des virtuellen Kraftwerks eine definierte, untere Ladezustandsgrenze GU, ist deren Leistungsbereitschaft nicht oder nur eingeschränkt gegeben. Gleiches gilt für die Überschreitung eines oberen Ladezustandsgrenzwertes GO. Hierdurch soll verhindert werden, dass elektrische Energie gleicher Anlage mit Ladezuständen über der Ladezustandsgrenze GO sowie mit Ladezuständen unter der Ladezustandsgrenze GU von der Regelungsvorrichtung des virtuellen Kraftwerks bei der Bereitstellung von positiver beziehungsweise negativer Speicherleistung nicht berücksichtigt werden. Unterschreitet beispielsweise ein maximal zur Verfügung stehende elektrische Leistung des virtuellen Kraftwerks durch ein Wegschalten der betreffenden Energiespeicheranlagen einen Grenzwert von beispielsweise 5 MW, gemäß einem Stand von Juni 2012, kann das virtuelle Kraftwerk nicht mehr an einem Markt für Regelleistung teilnehmen.

Es wird eine übergeordnete Steuereinheit beziehungsweise Regelungsvorrichtung vorgeschlagen, die kontinuierlich den Ladezustand der verteilten Energiespeicheranlagen überwacht, analysiert und bei Über- beziehungsweise Unterschreitung der Ladezustandsgrenzen GO und GU den Ladezustand wieder in den Arbeitsladezustand zurück bringt. Diese Steuerung oder Regelung funktioniert analog zu einem aktiven Balancing-System. Die Idee der vorliegenden Erfindung ist es, einen Ladungsausgleich zwischen einzelnen, insbesondere dezentral verteilten, Energiespeicheranlagen bereitzustellen, welche in großen Verbünden zu einem virtuellen Kraftwerk zusammengeschlossen sind. Auf diese Weise werden Energiespeicheranlagen vermieden, deren Ladezustände außerhalb des Bandes zur vollen Leistungsbereitstellung liegen und deshalb nicht oder lediglich teilweise für die Bereitstellung von Speicherleistungen berücksichtigt werden können.

Durch die aktive Art der energetischen Ausbalancierung zwischen elektrischen Energiespeicheranlagen eines virtuellen Kraftwerks erreichen alle Energiespeicheranlagen das Ladezustandsband zur vollen Leistungsbereitstellung. Somit kann ein virtuelles Kraftwerk mit der maximal möglichen Speicherleistung am Markt teilnehmen, wodurch ein finanzieller Mehrwert sowie eine zuverlässige Planungssicherheit geschaffen sind.

Erfindungsgemäß kann die Regelungsvorrichtung ein Ausbalancieren zwischen Energiespeicheranlagen mittels Leitungen ausführen, die vor diesem Ausbalancieren relativ schwach belastet wurden. Es sind Mittel zur Erstellung einer Rangfolge für die verwendbaren Leitungen hinsichtlich deren aktueller Belastungen oder aktuell zu übertragenden Ausgleichsladungen vorhanden. Darüber hinaus sind Mittel vorgesehen, welche dann die am wenigsten belasteten Leitungen zuerst für ausbalancierende Leistungsübertragungen nutzen. Eine aktuelle Belastung kann eine aktuelle zu übertragende elektrische Leistung sein. Es kann eine Rangfolge entsprechend der Belastungen von Leitungen erstellt werden, wobei eindeutig eine relativ starke zu einer relativ schwachen Belastung bestimmt werden kann.

Weitere vorteilhafte Ausgestaltungen werden in Verbindung mit den Unteransprüchen beansprucht.

Gemäß einer vorteilhaften Ausgestaltung kann die Messvorrichtung für die Regelungsvorrichtung zusätzlich zur Erfassung der Ausgleichsladungen geschaffen sein, die mittels der Energiespeicheranlagen paarweise miteinander elektrisch verbindenden Leitungen des elektrischen Kraftwerknetzes übertragen werden. Zur Durchführung von Ausgleichsladungen muss keine direkte Leitungsverbindung zwischen den auszubalancierenden Energiespeichersystemen bestehen. Die Idee hinter der Ausgleichsladung besteht vielmehr darin, dass von einem Energiespeichersystem mit relativ hohem Ladungszustand elektrische Energie in das Kraftwerksnetz eingespeist und von einem Energiespeichersystem mit relativ niedrigem Ladezustand elektrische Energie aus dem Kraftwerksnetz entnommen wird. Ein Austausch an Energie kann nicht nur bidirektional, sondern ebenso über weitere Zwischenleitungen oder mehreren Zwischenleitungen an Speichern vorbei erfolgen.

Gemäß einer weiteren vorteilhaften Ausgestaltung kann die durch Ausgleichsladungen übertragene Ausgleichsleistung zwischen Energiespeicheranlagen oder Energiespeichersystemen (je Leitung des elektrischen Kraftwerknetzes) maximal 15%, insbesondere maximal 5%, der jeweiligen Maximalleistung der Energiespeicheranlagen oder Energiespeichersysteme sein. Die Prozentangabe bezieht sich hier auf den maximalen Strom der Energiespeicheranlage. Desweiteren werden Leitungen bevorzugt, welche nur eine Teillast tragen und mit maximal 15%, insbesondere maximal 5%, der jeweiligen Maximalleistung der Leitung verwendet werden.

Gemäß einer weiteren vorteilhaften Ausgestaltung kann die Regelungsvorrichtung eine maximale Speicherleistung aller Energiespeicheranlagen kontinuierlich einstellen.

Gemäß einer weiteren vorteilhaften Ausgestaltung kann die Regelungsvorrichtung für alle Energiespeicheranlagen kritische Ladezustandsbereiche, insbesondere eine Alterung beschleunigende Ladezustandsbereiche, vermeiden.

Gemäß einer weiteren vorteilhaften Ausgestaltung können die Messungsvorrichtung und die Regelungsvorrichtung als ein Cloud-System oder Wolkensystem ausgebildet sein.

Gemäß einer weiteren vorteilhaften Ausgestaltung kann jeder Energiespeicheranlage ein elektrischer Verbraucher zugeordnet sein, den die Regelungsvorrichtung in Summe die von der Energiespeicheranlage beim Ausbalancieren, und zwar beim Entladen, abgegebene Energie zuführt.

Gemäß einer weiteren vorteilhaften Ausgestaltung kann die Messungsvorrichtung zusätzlich zur Erfassung der in Summe beim Ausbalancieren abgegebenen Energiemenge jeder Energiespeicheranlage geschaffen sein.

Gemäß einer weiteren vorteilhaften Ausgestaltung kann die Regelungsvorrichtung die untere Ladezustandsgrenze GU mittels eines Rückhaltewertes vergrößern.

Gemäß einer weiteren vorteilhaften Ausgestaltung kann die Regelungsvorrichtung die obere Ladezustandsgrenze GO mittels eines Pufferwertes verkleinern.

Gemäß einer weiteren vorteilhaften Ausgestaltung kann die Regelungsvorrichtung für das Ausbalancieren einen mathematischen Algorithmus verwenden.

Gemäß einer weiteren vorteilhaften Ausgestaltung kann die Regelungsvorrichtung für das Ausbalancieren Vorhersageberechnungen berücksichtigen.

Gemäß einer weiteren vorteilhaften Ausgestaltung kann die Regelungsvorrichtung für das Ausbalancieren zeitlich abhängiger Leistungsnutzungskurven der elektrischen Verbraucher berücksichtigen.

Die Verbindung wird anhand von Ausführungsbeispielen in Verbindung mit den Figuren näher beschrieben. Es zeigen:
- Figur 1: ein Ausführungsbeispiel eines erfindungsgemäßen virtuellen Kraftwerks;
- Figur 2: ein Ausführungsbeispiel eines erfindungsgemäßen Verfahrens zum Betrieb eines virtuellen Kraftwerks.

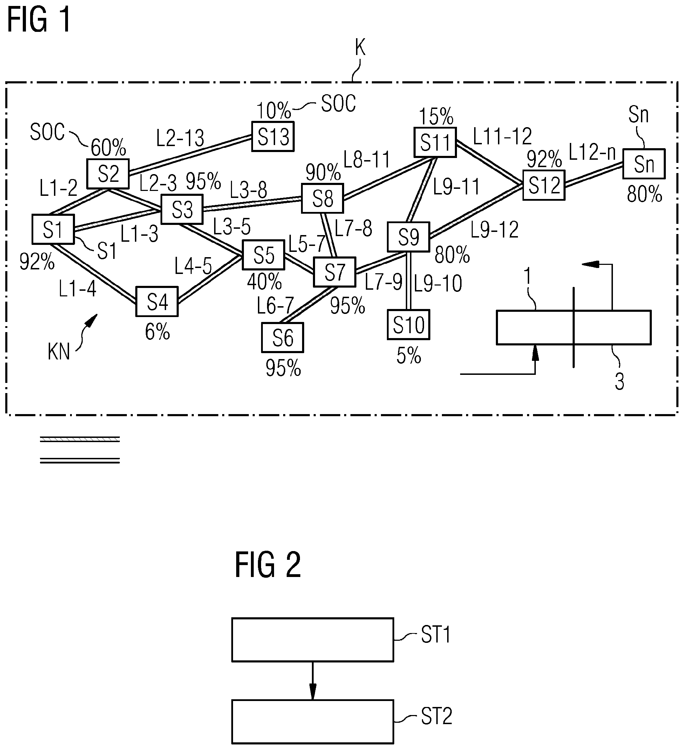

Figur 1 zeigt ein Ausführungsbeispiel eines erfindungsgemäßen virtuellen Kraftwerks K. Es wird eine Regelungsvorrichtung 3 für das virtuelle Kraftwerk K vorgeschlagen, welche kontinuierlich die Ladezustände der einzelnen, dezentral verteilten, elektrischen Energiespeicheranlagen S1 ... Sn erfasst und durch einen optimierten Regelalgorithmus elektrische Energie von Energiespeicheranlagen mit hohem Ladezustand zu Energiespeicheranlagen mit niedrigem Ladezustand überführt. Dieser Prozess wird als Ausbalancieren oder "Balancing" beschrieben. Hierfür ermittelt die Regelungsvorrichtung 3 des virtuellen Kraftwerks K die Ladezustände der Energiespeicheranlagen S1 ... Sn, deren Ladezustand nicht im optimalen Arbeitsbereich liegen. Danach werden die Energiespeicheranlagen S1 ... Sn gezielt untereinander ausbalanciert, um einen optimalen Arbeitsbereich zu erreichen. Es wird dabei ein Algorithmus angewendet, bei dem die im oberen Ladezustandsbereich befindlichen Energiespeicheranlagen die im unteren Ladezustandsbereich laden. Der Hauptarbeitsbereich der Energiespeicheranlagen kann beispielsweise im Bereich 20% bis 90% festgelegt sein. Hierdurch wird die volle Leistungsbereitschaft der einzelnen Energiespeicheranlagen S1 ... Sn gewährleistet. Der Bereich kann mit Einschränkungen ebenso auf 10% bis 95% erweitert werden. Der Ausgleich zwischen den einzelnen Energiespeicheranlagen S1 ... Sn wird durch die zentrale Regelungsvorrichtung 3, welche Zugriff auf alle Energiespeicheranlagen S1 ... Sn hat, durchgeführt. Durch den Einsatz eines Integral- oder Proportionalregels oder eine Kombination aus beiden, werden für jede einzelne Energiespeicheranlagen S1 ... Sn die Ausgleichsladungen gesteuert und können am Ende eines Abrechnungszeitraumes gegeneinander aufgerechnet werden.

Der Eintritt der Ausbalancierung wird mittels der Regelungsvorrichtung 3 freigegeben. Diese erkennt die Ladezustände einzelner Energiespeicheranlagen S1 ... Sn im virtuellen Kraftwerk K, die sich nicht im optimalen Arbeitsbereich befinden. Danach werden mittels der Regelungsvorrichtung 3 die einzelnen Energiespeicheranlagen S1 ... Sn untereinander ausbalanciert, um einen optimalen Arbeitsbereich des Ladezustandes zu erreichen. Weitere Ausführungsbeispiele des virtuellen Kraftwerks K können mittels der zentralen Regelungsvorrichtung 3 derart geregelt werden, dass beispielsweise Energiespeicheranlagen mit einem Ladezustand kleiner 20% nicht mehr weiter entladen werden, dass Energiespeicheranlagen mit einem Ladezustand von größer 95% nicht mehr weiter geladen werden, dass Energiespeicheranlagen mit einer minimalen Spannung auf einer Einzelzellebene von U nominal -300mV beziehungsweise U minimal +500mV nicht mehr weiter entladen werden und/oder dass Energiespeicheranlagen mit einer maximalen Spannung auf Einzelzellebene von U maximal -50mV nicht mehr weiter geladen werden.

Figur 1 zeigt eine schematische Darstellung eines Zusammenschlusses dezentral verteilter, elektrischer Energiespeicheranlagen S1 ... Sn zum virtuellen Kraftwerk K in einem lokal unterschiedlich belasteten elektrischen Kraftwerksnetz, wobei elektrische Leitungen Li-j jeweils paarweise zwei Energiespeicheranlagen miteinander elektrisch verbinden. Die Prozentangaben zeigen den jeweiligen Ladezustand einer Energiespeicheranlage Si. Die in dieser Figur stark belasteten Leitungen Li-j des elektrischen Kraftwerksnetzes KN sind zusätzlich schraffiert dargestellt. Eine weitere Ausführungsmöglichkeit der Regelungsvorrichtung 3 besteht in einer zusätzlichen, kontinuierlichen Erfassung der lokalen Belastungen des elektrischen Kraftwerksnetzes KN zwischen allen Energiespeicheranlagen S1 ... Sn, wodurch das Ausbalancieren zwischen den einzelnen Energiespeicheranlagen durch temporär schwach belastete Leitungen Li-j erfolgen kann. Diese weisen keine zusätzliche Schraffur auf. Durch diese weitere Ausführungsmöglichkeit einer kontinuierlichen, lokal aufgelösten Erfassung der Belastung des elektrischen Kraftwerknetzes KN zwischen den einzelnen Energiespeicheranlagen S1 ... Sn durch eine zentrale Messungsvorrichtung 1 für die übergeordnete Regelungsvorrichtung 3 des virtuellen Kraftwerks K kann ein optimaler, netzschonender Ladungsausgleich gewährleistet werden.

Gemäß diesem Ausführungsbeispiel können verschiedene Ausgleichsströme zwischen den einzelnen Energiespeicheranlagen S1 ... Sn fließen, die abhängig von einer lokalen Belastung des elektrischen Kraftwerksnetzes Kraftwerksnetz KN und der entsprechenden Leitungen Li-j sind. Zusätzlich kann ein optimierter Regelalgorithmus die einzelnen Energiespeicheranlagen S1 ... Sn derart für eine Ausbalancierung wählen, dass lokale Bereiche des elektrischen Kraftwerksnetzes KN möglichst wenig belastet werden. Grundsätzlich kann das elektrische Kraftwerknetz KN durch ein allgemeines Leistungsversorgungsnetz geschaffen sein. Grundsätzlich können Kraftwerksnetz KN und ein allgemeines elektrisches Leistungsversorgungsnetz auf einfache Weise gekoppelt sein. Die zum Ladungsausgleich fließenden elektrischen Ströme liegen vorteilhaft unterhalb 5% der maximal möglichen Ströme, damit eine Alterung einer entsprechenden Energiespeicheranlage S1 ... Sn nicht beschleunigt wird. Dies beinhaltet ebenso variabel hohe Ströme, welche abhängig von der lokalen Netzbelastung eingestellt werden können. Die fließenden Ströme sollen dabei unterhalb von 0,05C liegen. Bevorzugt werden die Ausgleichsleistungen also mit maximal 0,05C Übertragung, wobei dies 5% einer Maximalleistung eines Energiespeichersystems sind. In Randbereichen kann die Ausgleichsleistung auf bis zu 0,15C erhöht werden, wobei für einen Schnelleingriff keine Leistungsbeschränkungen vorgegeben werden müssen. Die Regelung mittels der Messungsvorrichtung 1 und der Regelungsvorrichtung 3 kann aus Sicherheitsgründen bei Speichertemperaturen von T>50°C und T<-10°C auf 0,15C eingeschränkt werden. Bei Speichertemperaturen von T>55°C und T<-15°C werden vorteilhaft lediglich 0,05C zugelassen. Grundsätzlich wird mittels der Messungsvorrichtung 1 und der Regelungsvorrichtung 3 kein gleicher Ladezustand aller Energiespeicheranlagen S1 ... Sn angestrebt, sondern es wird eine optimale Betriebsstrategie angewendet, welche die Sicherstellung der maximalen Speicherleistung für das virtuelle Kraftwerk K gewährleistet. Die Idee der vorliegenden Erfindung beruht auf der vollen Bereitstellung der Speicherleistung des virtuellen Kraftwerks K zu jeder Zeit. Weiterhin kann der Algorithmus für die Regelungsvorrichtung 3 derart geschaffen sein, dass kritische Ladezustandsbereiche (SOC-Bereich), in denen eine beschleunigte Alterung von Energiespeicheranlagen S1 ... Sn erwartet wird, vermieden werden. Indem diese kritischen Ladezustandsbereiche vermieden werden, werden durch die Ausgleichsladungen zwischen den Energiespeicheranlagen S1 ... Sn zusätzlich die Alterung der jeweiligen Energiespeicheranlagen S1 .... Sn minimiert. Die übergeordnete Messvorrichtung 1 mit der übergeordneten Regelungsvorrichtung 3 berücksichtigen spezielle Arbeitsbereiche der Energiespeicheranlagen S1 ... Sn, die durch elektrochemische Vorgänge eine erhöhte Alterung bewirken. Diese liegen beispielsweise für einen Batterietyp A im Bereich von 30% bis 40%, für einen Batterietyp B im Bereich von 55% bis 60% und für einen Batterietyp C im Bereich von 71% bis 72%. Entsprechend wird die übergeordnete Regelungsvorrichtung 3 zusätzlich dafür verwendet, die Ladezustände dieser Batterien der Energiespeicheranlagen S1 ... Sn außerhalb dieser Bereiche einzustellen. Alternativ oder kumulativ können die Messungsvorrichtung 1 und die Regelungsvorrichtung 3 als ein Cloud-System ausgebildet sein. Somit überwacht das Cloud-System die einzelnen Ausgleichsladungen und registriert diese zwischen den einzelnen Energiespeicheranlagen S1 ... Sn. Basierend auf Cloud-Computing kann ein virtueller Stand der einzelnen Energiespeicheranlagen S1 ... Sn erfasst werden, damit jede Energiespeicheranlage S1 ... Sn in Summe, aufgrund einer Wettbewerbsgleichheit, nicht mehr oder weniger Energie für den Eigenverbrauch in der Energiespeicheranlage S1 ... Sn zur Verfügung hat. Alternativ können am Ende eines Abrechnungszeitraumes Ausgleichsladungen vergütet werden. Es wird sichergestellt, dass jeder Teilnehmer entweder in Summe die selbst erzeugte Energie aus der eigenen Energiespeicheranlage S1 ... Sn zur Verfügung hat oder durch ein nachfolgendes Abrechungssystem der Ausbalancierung Rechnung getragen werden kann. Jede Energiespeicheranlage S1 ... Sn kann an einen elektrischen Energieerzeuger angeschlossen sein.

Figur 2 zeigt ein Ausführungsbeispiel eines erfindungsgemäßen Verfahrens zum Betrieb eines virtuellen Kraftwerks K zur Pufferung elektrischer Leistung, insbesondere Regelleistung, für elektrische Verbraucher, aufweisend eine Mehrzahl von räumlich verteilten elektrischen Energiespeicheranlagen S1 ... Sn, die mittels eines elektrischen Kraftwerknetzes KN elektrisch aneinander angeschlossen sind, wobei in einem ersten Schritt ST1 eine Messvorrichtung 1 die Ladezustände aller Energiespeicheranlagen S1 ... Sn erfasst. Die Messwerte werden an eine Regelungsvorrichtung 3 übertragen, die alle Ladezustände zwischen einer unteren Ladezustandsgrenze GU und einer oberen Ladezustandsgrenze GO in einem zweiten Schritt ST2 einstellt beziehungsweise regelt. Die Regelung erfolgt dadurch, dass alle Ladezustände mittels eines Ladungsausgleiches einstellt werden, bei dem mittels eines Ausbalancierens elektrische Ausgleichsladungen von Energiespeicheranlagen mit relativ hohem Ladezustand zu Energiespeicheranlagen mit relativ niedrigem Ladezustand mittels des elektrischen Kraftwerksnetzes KN übertragen werden. Die Regelungsvorrichtung 3 verwendet insbesondere einen integrierten Erkennungsalgorithmus für alle Ladezustände und Leitungsbelastungen sowie einen optimierten Regelalgorithmus zur Bereitung maximaler elektrischer Leistung an den Energiespeicheranlagen S1 ... Sn. Dieses Vorgehen beinhaltet ebenso Rückhalte-Einstellungen, die die Teilnehmer an der jeweiligen Energiespeicheranlage S1 ... Sn vorgeben können, um einen Ladezustand dauerhaft oder temporär nicht zu unter- beziehungsweise zu überschreiten.

Technisch wird die Optimierung der Leistungsbereitstellung eines virtuellen Kraftwerks K bestehend aus einzelnen, dezentral verteilten elektrischen Energiespeicheranlagen durch eine Regelungsvorrichtung 3, beispielsweise in Form einer Steuer- oder Regeleinheit, mit integriertem Erkennungsalgorithmus für die mittels der Messungsvorrichtung 1 erfassten Zustände, beispielsweise Ladezustände, der Energiespeicheranlagen realisiert. Mittels Einbindung von mathematischen Vorhersageberechnungen kann das virtuelle Kraftwerk K noch vorhersagbarer und steuerbarer geschaffen sein.

Unter Anbetracht der kommenden Liberalisierung des Strommarktes mit insbesondere tageszeitabhängigen Strompreisen, macht es unabhängig vom aktuellen Stand der Technik Sinn, das virtuelle Kraftwerke K zu günstigen Zeiten auszubalancieren, und zwar beispielsweise bei einer niedrigen Belastung lokaler Stromnetze, da die kontinuierliche Bereitstellung von Speicherleistungen, beispielsweise Regelleistung, ebenso nach einem etwaigen finanziellen Aufwand der aktiven Balancierung der einzelnen Energiespeicheranlagen finanziell lukrativer sein kann.

Die Erfindung betrifft ein virtuelles Kraftwerk und ein Verfahren zum Betrieb eines virtuellen Kraftwerks (K) zur Pufferung elektrischer Energie und damit zur Sicherstellung elektrischer Leistungsfähigkeit, insbesondere Regelleistung, für elektrische Verbraucher, aufweisend eine Mehrzahl von räumlich verteilten elektrischen Energiespeicheranlagen (S1...Sn), die mittels eines elektrischen Kraftwerksnetzes (KN) elektrisch aneinander angeschlossen, beziehungsweise miteinander verbunden sind, wobei eine Messungsvorrichtung (1) zur Erfassung (ST1) der Ladezustände (SOC) aller Energiespeicheranlagen (Sl...Sn) für eine Regelungsvorrichtung (3) zur Einstellung (ST2) aller Ladezustände zwischen einer unteren Ladezustandsgrenze GU und einer oberen Ladezustandsgrenze GO geschaffen ist, wobei die Einstellung aller Ladezustände mittels eines Ladungsausgleiches ausgeführt wird, bei dem mittels eines Ausbalancierens elektrische Ausgleichsladungen von Energiespeicheranlagen mit relativ hohem Ladezustand zu Energiespeicheranlagen mit relativ niedrigem Ladezustand mittels des elektrischen Kraftwerksnetzes (KN) übertragen werden.

## Patentansprüche

1. Virtuelles Kraftwerk (K) zur Pufferung elektrischer Leistung, insbesondere Regelleistung, für elektrische Verbraucher, aufweisend eine Mehrzahl von räumlich verteilten elektrischen Energiespeicheranlagen (S1...Sn), die mittels eines elektrischen Kraftwerksnetzes (KN) elektrisch aneinander angeschlossen sind, wobei eine Messungsvorrichtung (1) zur Erfassung der Ladezustände (SOC) aller Energiespeicheranlagen (S1...Sn) für eine Regelungsvorrichtung (3) zur Einstellung aller Ladezustände zwischen einer unteren Ladezustandsgrenze GU und einer oberen Ladezustandsgrenze GO geschaffen ist, wobei die Einstellung aller Ladezustände mittels eines Ladungsausgleiches ausgeführt wird, bei dem mittels eines Ausbalancierens elektrische Ausgleichsladungen von Energiespeicheranlagen mit relativ hohem Ladezustand zu Energiespeicheranlagen mit relativ niedrigem Ladezustand mittels des elektrischen Kraftwerksnetzes (KN) übertragen werden,
**dadurch gekennzeichnet, dass**
die Regelungsvorrichtung (3) ein Ausbalancieren zwischen Energiespeicheranlagen (Sl...Sn) mittels Leitungen (Li-j) ausführt, die vor diesem Ausbalancieren relativ kleine Ausgleichsladungen übertragen hatten, wobei Mittel zur Erstellung einer Rangfolge für die verwendbaren Leitungen hinsichtlich deren aktueller Belastungen oder aktuell zu übertragenden Ausgleichsladungen vorhanden sind, und wobei Mittel vorgesehen sind, welche die dann am wenigsten belasteten Leitungen zuerst für ausbalancierende Leistungsübertragungen nutzen.

2. Virtuelles Kraftwerk (K) gemäß Anspruch 1, **dadurch gekennzeichnet, dass** die Messungsvorrichtung (1) für die Regelungsvorrichtung (3) zusätzlich zur Erfassung der Ausgleichsladungen geschaffen ist, die mittels die Energiespeicheranlagen (Sl...Sn) paarweise miteinander elektrisch verbindenden Leitungen (Li-j) des elektrischen Kraftwerknetzes (KN) übertragen werden.

3. Virtuelles Kraftwerk (K) gemäß Anspruch 1 oder 2, **dadurch gekennzeichnet, dass** die durch Ausgleichsladungen übertragene Ausgleichsleistung je Leitung (Li-j) des elektrischen Kraftwerksnetzes (KN) maximal 15%, insbesondere maximal 5 %, der jeweiligen Maximalleistung der Leitung (Li-j) ist.

4. Virtuelles Kraftwerk (K) gemäß Anspruch 1, 2 oder 3, **dadurch gekennzeichnet, dass** die durch Ausgleichsladungen übertragene Ausgleichsleistung je Leitung (Li-j) des elektrischen Kraftwerksnetzes (KN) maximal 15 %, insbesondere maximal 5 %, der jeweiligen Maximalleistung der Energiespeicheranlage beträgt.

5. Virtuelles Kraftwerk (K) gemäß einem der vorhergehenden Ansprüche, **dadurch gekennzeichnet, dass** die Regelungsvorrichtung (3) eine maximale Speicherleistung aller Energiespeicheranlagen (S1...Sn) kontinuierlich einstellt.

6. Virtuelles Kraftwerk (K) gemäß einem der vorhergehenden Ansprüche, **dadurch gekennzeichnet, dass** die Regelungsvorrichtung (3) für alle Energiespeicheranlagen (Sl...Sn) kritische Ladezustandsbereiche, insbesondere eine Alterung beschleunigende Ladezustandsbereiche, vermeidet.

7. Virtuelles Kraftwerk (K) gemäß einem der vorhergehenden Ansprüche, **dadurch gekennzeichnet, dass** die Messungsvorrichtung (1) und die Regelungsvorrichtung (3) als ein Cloud-System ausgebildet sind.

8. Virtuelles Kraftwerk (K) gemäß einem der vorhergehenden Ansprüche, **dadurch gekennzeichnet, dass** jeder Energiespeicheranlage (Sl...Sn) ein elektrischer Verbraucher zugeordnet ist, dem die Regelungsvorrichtung (3) in Summe die von der Energiespeicheranlage beim Entladen abgegebene Energie zuführt.

9. Virtuelles Kraftwerk (K) gemäß einem der vorhergehenden Ansprüche 1 bis 8, **dadurch gekennzeichnet, dass** die Messungsvorrichtung (1) zusätzlich zur Erfassung der in Summe beim Ausbalancieren abgegebenen Energiemenge jeder Energiespeicheranlage (Sl...Sn) geschaffen ist.

10. Virtuelles Kraftwerk (K) gemäß einem der vorhergehenden Ansprüche, **dadurch gekennzeichnet, dass** die Regelungsvorrichtung (3) eine untere Ladezustandsgrenze GU mittels eines an einer Energiespeicheranlage eingestellten Rückhaltewertes vergrößert.

11. Virtuelles Kraftwerk (K) gemäß einem der vorhergehenden Ansprüche, **dadurch gekennzeichnet, dass** die Regelungsvorrichtung (3) eine obere Ladezustandsgrenze GO mittels eines an einer Energiespeicheranlage eingestellten Pufferwertes verkleinert.

12. Virtuelles Kraftwerk (K) gemäß einem der vorhergehenden Ansprüche, **dadurch gekennzeichnet, dass** die Regelungsvorrichtung (3) für das Ausbalancieren einen mathematischen Algorithmus verwendet.

13. Virtuelles Kraftwerk (K) gemäß einem der vorhergehenden Ansprüche, **dadurch gekennzeichnet, dass** die Regelungsvorrichtung (3) für das Ausbalancieren Vorhersageberechnungen berücksichtigt.

14. Virtuelles Kraftwerk (K) gemäß einem der vorhergehenden Ansprüche, **dadurch gekennzeichnet, dass** die Regelungsvorrichtung (3) für das Ausbalancieren zeitlich abhängige Leistungsnutzungskurven der elektrischen Verbraucher berücksichtigt.

15. Verfahren zum Betrieb eines virtuellen Kraftwerks (K) zur Pufferung elektrischer Leistung, insbesondere Regelleistung, für elektrische Verbraucher, aufweisend eine Mehrzahl von räumlich verteilten elektrischen Energiespeicheranlagen (S1...Sn), die mittels eines elektrischen Kraftwerksnetzes (KN) elektrisch aneinander angeschlossen sind, wobei eine Messungsvorrichtung (1) zur Erfassung (ST1) der Ladezustände (SOC) aller Energiespeicheranlagen (S1...Sn) für eine Regelungsvorrichtung (3) zur Einstellung (ST2) aller Ladezustände zwischen einer unteren Ladezustandsgrenze GU und einer oberen Ladezustandsgrenze GO geschaffen ist, wobei die Einstellung aller Ladezustände mittels eines Ladungsausgleiches ausgeführt wird, bei dem mittels eines Ausbalancierens elektrische Ausgleichsladungen von Energiespeicheranlagen mit relativ hohem Ladezustand zu Energiespeicheranlagen mit relativ niedrigem Ladezustand mittels des elektrischen Kraftwerksnetzes (KN) übertragen werden,
**dadurch gekennzeichnet, dass**
die Regelungsvorrichtung (3) ein Ausbalancieren zwischen Energiespeicheranlagen (Sl...Sn) mittels Leitungen (Li-j) ausführt, die vor diesem Ausbalancieren relativ schwach belastet wurden, wobei für die verwendbaren Leitungen eine Rangfolge hinsichtlich deren aktueller Belastungen oder aktuell zu übertragenden Ausgleichsladungen erstellt wird, wobei dann die am wenigsten belasteten Leitungen zuerst für ausbalancierende Leistungsübertragungen genutzt werden.

16. Verfahren gemäß Anspruch 15, **dadurch gekennzeichnet, dass** die Messungsvorrichtung (1) für die Regelungsvorrichtung (3) zusätzlich zur Erfassung der Ausgleichsladungen geschaffen ist, die mittels die Energiespeicheranlagen (Sl...Sn) paarweise miteinander elektrisch verbindenden Leitungen (Li-j) des elektrischen Kraftwerknetzes (KN) übertragen werden.

17. Verfahren gemäß Anspruch 15 oder 16, **dadurch gekennzeichnet, dass** die durch Ausgleichsladungen übertragene Ausgleichsleistung je Leitung (Li-j) des elektrischen Kraftwerksnetzes (KN) maximal 15 %, insbesondere maximal 5 %, der jeweiligen Maximalleistung der Leitung (Li-j) ist.

18. Verfahren gemäß Anspruch 15, 16 oder 17, **dadurch gekennzeichnet, dass** die durch Ausgleichsladungen übertragene Ausgleichsleistung je Leitung (Li-j) des elektrischen Kraftwerksnetzes (KN) maximal 15 %, insbesondere maximal 5 %, der jeweiligen Maximalleistung der Energiespeicheranlage beträgt.

19. Verfahren gemäß einem der vorhergehenden Ansprüche 15 bis 18, **dadurch gekennzeichnet, dass** die Regelungsvorrichtung (3) eine maximale Speicherleistung aller Energiespeicheranlagen (Sl...Sn) kontinuierlich einstellt.

20. Verfahren gemäß einem der vorhergehenden Ansprüche 15 bis 19, **dadurch gekennzeichnet, dass** die Regelungsvorrichtung (3) für alle Energiespeicheranlagen (Sl...Sn) kritische Ladezustandsbereiche, insbesondere eine Alterung beschleunigende Ladezustandsbereiche, vermeidet.

21. Verfahren gemäß einem der vorhergehenden Ansprüche 15 bis 20, **dadurch gekennzeichnet, dass** die Messungsvorrichtung (1) und die Regelungsvorrichtung (3) als ein Cloud-System ausgebildet sind.

22. Verfahren gemäß einem der vorhergehenden Ansprüche 15 bis 21, **dadurch gekennzeichnet, dass** jeder Energiespeicheranlage (Sl...Sn) ein elektrischer Verbraucher zugeordnet ist, dem die Regelungsvorrichtung (3) in Summe die von der Energiespeicheranlage beim Ausbalancieren, und zwar beim Entladen, abgegebene Energie zuführt.

23. Verfahren gemäß einem der vorhergehenden Ansprüche 15 bis 22, **dadurch gekennzeichnet, dass** die Messungsvorrichtung (1) zusätzlich zur Erfassung der in Summe beim Ausbalancieren abgegebenen Energiemenge jeder Energiespeicheranlage (S1...Sn) geschaffen ist.

24. Verfahren gemäß einem der vorhergehenden Ansprüche 15 bis 23, **dadurch gekennzeichnet, dass** die Regelungsvorrichtung (3) die untere Ladezustandsgrenze GU mittels eines Rückhaltewertes vergrößert.

25. Verfahren gemäß einem der vorhergehenden Ansprüche 15 bis 24, **dadurch gekennzeichnet, dass** die Regelungsvorrichtung (3) die obere Ladezustandsgrenze GO mittels eines Pufferwertes verkleinert.

26. Verfahren gemäß einem der vorhergehenden Ansprüche 15 bis 25, **dadurch gekennzeichnet, dass** die Regelungsvorrichtung (3) für das Ausbalancieren einen mathematischen Algorithmus verwendet.

27. Verfahren gemäß einem der vorhergehenden Ansprüche 15 bis 26, **dadurch gekennzeichnet, dass** die Regelungsvorrichtung (3) für das Ausbalancieren Vorhersageberechnungen berücksichtigt.

28. Verfahren gemäß einem der vorhergehenden Ansprüche 15 bis 27, **dadurch gekennzeichnet, dass** die Regelungsvorrichtung (3) für das Ausbalancieren zeitlich abhängige Leistungsnutzungskurven der elektrischen Verbraucher berücksichtigt.

## Claims

1. Virtual power plant (K) for the buffering of electric power, in particular control power, for electrical loads, comprising a plurality of spatially distributed electrical energy storage systems (S1 ... Sn), which are electrically interconnected by means of an electrical power plant network (KN), wherein a measuring device (1) is configured for the detection of the states of charge (SOC) of all the energy storage systems (S1 ... Sn) for a control device (3) for adjusting all the states of charge between a lower state of charge limit GU and an upper state of charge limit GO, wherein all the states of charge are adjusted by means of a charge equalization wherewith, by means of balancing, electrical equalization charges are transmitted from energy storage systems having a relatively high state of charge to energy storage systems having a relatively low state of charge, via the electrical power plant network (KN),
**characterized in that**
the control device (3) executes a balancing between energy storage systems (S1 ... Sn) by means of lines (Li-j) which, prior to said balancing, had transmitted relatively low equalization charges, wherein there are means for creating an order of importance for the usable lines in respect of the present loading thereof or equalization charges to be transmitted at present, and wherein means are provided that initially use the lines that then have the lowest loading for balancing power transmissions.

2. Virtual power plant (K) according to Claim 1, **characterized in that** the measuring device (1) for the control device (3) is additionally configured for the detection of the equalization charges, which are transmitted by means of lines (Li-j) of the electrical power plant network (KN) which electrically interconnect the energy storage systems (S1 ... Sn) in pairs.

3. Virtual power plant (K) according to Claim 1 or 2, **characterized in that** the balancing power transmitted by equalization charges per line (Li-j) of the electrical power plant network (KN) is a maximum of 15%, in particular a maximum of 5%, of the respective maximum capacity of the line (Li-j).

4. Virtual power plant (K) according to Claim 1, 2 or 3, **characterized in that** the balancing power transmitted by equalization charges per line (Li-j) of the electrical power plant network (KN) is a maximum of 15%, in particular a maximum of 5%, of the respective maximum capacity of the energy storage system.

5. Virtual power plant (K) according to one of the preceding claims, **characterized in that** the control device (3) adjusts a maximum storage capacity of all the energy storage systems (S1 ... Sn) in a continuous manner.

6. Virtual power plant (K) according to one of the preceding claims, **characterized in that** the control device (3) prevents critical ranges for states of charge for all the energy storage systems (S1 ... Sn), in particular ranges for states of charge which accelerate ageing.

7. Virtual power plant (K) according to one of the preceding claims, **characterized in that** the measuring device (1) and the control device (3) are configured as a cloud system.

8. Virtual power plant (K) according to one of the preceding claims, **characterized in that** each energy storage system (S1 ... Sn) is associated with an electrical load, to which the control device (3) routes in total the energy delivered by the energy storage system during discharging.

9. Virtual power plant (K) according to one of the preceding Claims 1 to 8, **characterized in that** the measuring device (1) is additionally configured for the detection of the amount of energy delivered in total of each energy storage system (S1 ... Sn) during balancing.

10. Virtual power plant (K) according to one of the preceding claims, **characterized in that** the control device (3) raises a lower state of charge limit GU by means of a restraining value set on an energy storage system.

11. Virtual power plant (K) according to one of the preceding claims, **characterized in that** the control device (3) reduces an upper state of charge limit GO by means of a buffer value set on an energy storage system.

12. Virtual power plant (K) according to one of the preceding claims, **characterized in that** the control device (3) uses a mathematical algorithm for the balancing.

13. Virtual power plant (K) according to one of the preceding claims, **characterized in that** the control device (3) considers predictive calculations for the balancing.

14. Virtual power plant (K) according to one of the preceding claims, **characterized in that** the control device (3) considers time-dependent power utilization curves of the electrical loads for the balancing.

15. Method for operating a virtual power plant (K) for the buffering of electric power, in particular control power, for electrical loads, comprising a plurality of spatially distributed electrical energy storage systems (S1 ... Sn), which are electrically interconnected by means of an electrical power plant network (KN), wherein a measuring device (1) is configured for the detection (ST1) of the states of charge (SOC) of all the energy storage systems (S1 ... Sn) for a control device (3) for adjusting (ST2) all the states of charge between a lower state of charge limit GU and an upper state of charge limit GO, wherein all the states of charge are adjusted by means of a charge equalization wherewith, by means of balancing, electrical equalization charges are transmitted from energy storage systems having a relatively high state of charge to energy storage systems having a relatively low state of charge, via the electrical power plant network (KN), **characterized in that**
the control device (3) executes a balancing between energy storage systems (S1 ... Sn) by means of lines (Li-j) which had a relatively low level of loading prior to said balancing, wherein an order of importance is created for the usable lines in respect of the present loading thereof or equalization charges to be transmitted at present, wherein the lines having the lowest loading are then initially used for balancing power transmissions.

16. Method according to Claim 15, **characterized in that** the measuring device (1) for the control device (3) is additionally configured for the detection of the equalization charges, which are transmitted by means of lines (Li-j) of the electrical power plant network (KN) which electrically interconnect the energy storage systems (S1 ... Sn) in pairs.

17. Method according to Claim 15 or 16, **characterized in that** the balancing power transmitted by equalization charges per line (Li-j) of the electrical power plant network (KN) is a maximum of 15%, in particular a maximum of 5%, of the respective maximum capacity of the line (Li-j).

18. Method according to Claim 15, 16 or 17, **characterized in that** the balancing power transmitted by equalization charges per line (Li-j) of the electrical power plant network (KN) is a maximum of 15%, in particular a maximum of 5%, of the respective maximum capacity of the energy storage system.

19. Method according to one of the preceding Claims 15 to 18, **characterized in that** the control device (3) adjusts a maximum storage capacity of all the energy storage systems (S1 ... Sn) in a continuous manner.

20. Method according to one of the preceding Claims 15 to 19, **characterized in that** the control device (3) prevents critical ranges for states of charge for all the energy storage systems (S1 ... Sn), in particular ranges for states of charge which accelerate ageing.

21. Method according to one of the preceding Claims 15 to 20, **characterized in that** the measuring device (1) and the control device (3) are configured as a cloud system.

22. Method according to one of the preceding Claims 15 to 21, **characterized in that** each energy storage system (S1 ... Sn) is associated with an electrical load, to which the control device (3) routes in total the energy delivered by the energy storage system during balancing, and specifically during discharging.

23. Method according to one of the preceding Claims 15 to 22, **characterized in that** the measuring device (1) is additionally configured for the detection of the amount of energy delivered in total during balancing of each energy storage system (S1 ... Sn) .

24. Method according to one of the preceding Claims 15 to 23, **characterized in that** the control device (3) raises the lower state of charge limit GU by means of a restraining value.

25. Method according to one of the preceding Claims 15 to 24, **characterized in that** the control device (3) reduces the upper state of charge limit GO by means of a buffer value.

26. Method according to one of the preceding Claims 15 to 25, **characterized in that** the control device (3) uses a mathematical algorithm for the balancing.

27. Method according to one of the preceding Claims 15 to 26, **characterized in that** the control device (3) considers predictive calculations for the balancing.

28. Method according to one of the preceding Claims 15 to 27, **characterized in that** the control device (3) considers time-dependent power utilization curves of the electrical loads for the balancing.

## Revendications

1. Centrale (K) électrique virtuelle pour tamponner de la puissance électrique, notamment de la puissance de réglage, pour des consommateurs électriques, ayant une pluralité d'installations (S1...Sn) d'accumulation d'énergie électrique réparties dans l'espace, qui sont connectées électriquement les unes aux autres, au moyen d'un réseau (KN) électrique de centrale, dans lequel il est ménagé un dispositif (3) de mesure pour relever les états (SOC) de charge de toutes les installations (S1...Sn) d'accumulation d'énergie pour un dispositif (3) de réglage, afin de régler tous les états de charge entre une limite GU inférieure d'état de charge et une limite GO supérieure d'état de charge, le réglage de tous les états de charge étant effectué au moyen d'une comparaison de charges, des charges électriques de compensation étant, au moyen d'un équilibrage, transportées d'installations d'accumulation d'énergie à état de charge relativement haut à des installations d'accumulation d'énergie à état de charge relativement bas, au moyen du réseau (KN) électrique de centrale,
**caractérisée en ce que**
le dispositif (3) de réglage exécute un équilibrage entre des installations (S1...Sn) d'accumulation d'énergie au moyen de lignes (Li-j) qui, avant cet équilibrage, avaient transporté des charges de compensation relativement petites, dans lequel il y a des moyens d'établissement d'un rang des lignes utilisables en ce qui concerne leur charge en cours ou des charges de compensation à transporter en cours, et dans lequel il est prévu des moyens, qui utilisent les lignes le moins chargées d'abord pour des transports de puissance d'équilibrage.

2. Centrale (K) électrique virtuelle suivant la revendication 1, **caractérisée en ce que** le dispositif (1) de mesure, comme dispositif (3) de réglage, est prévu supplémentairement pour relever les charges de compensation, qui sont transportées au moyen des lignes (Li-j) du réseau (KN) électrique de centrale reliant électriquement entre elles par paire des installations (S1...Sn) d'accumulation d'énergie.

3. Centrale (K) électrique virtuelle suivant la revendication 1 ou 2,
**caractérisée en ce que** la puissance de compensation représente par ligne (Li-j) du réseau (KN) électrique de centrale au maximum 15%, notamment au maximum 5%, de la puissance maximum respective de la ligne (Li-j).

4. Centrale (K) électrique virtuelle suivant la revendication 1, 2 ou 3,
**caractérisée en ce que** la puissance de compensation transportée par des charges de compensation représente par ligne (Li-j) du réseau (KN) électrique de centrale au maximum 15%, notamment au maximum 5%, de la puissance maximum respective de l'installation d'accumulation d'énergie.

5. Centrale (K) électrique virtuelle suivant l'une des revendications précédentes, **caractérisée en ce que** le dispositif (3) de réglage règle en continu une puissance maximum d'accumulation de toutes les installations (S1...Sn) d'accumulation d'énergie.

6. Centrale (K) électrique virtuelle suivant l'une des revendications précédentes, **caractérisée en ce que** le dispositif (3) de réglage empêche, pour toutes les installations (S1...Sn) d'accumulation d'énergie, d'avoir des parties d'état de charge critique, notamment des parties d'état de charge accélérant un vieillissement.

7. Centrale (K) électrique virtuelle suivant l'une des revendications précédentes, **caractérisée en ce que** le dispositif (1) de mesure et le dispositif (3) de réglage sont constitués sous la forme d'un système cloud.

8. Centrale (K) électrique virtuelle suivant l'une des revendications précédentes, **caractérisée en ce que** chaque installation (S1...Sn) d'accumulation d'énergie est associée à un consommateur électrique, auquel le dispositif (3) de réglage envoie, sous la forme d'une somme, l'énergie cédée à la décharge par l'installation d'accumulation d'énergie.

9. Centrale (K) électrique virtuelle suivant l'une des revendications 1 à 8 précédentes, **caractérisée en ce que** le dispositif (1) de mesure est prévu supplémentairement pour relever la quantité d'énergie, cédée en tout lors de l'équilibrage, de chaque installation (S1...Sn) d'accumulation d'énergie.

10. Centrale (K) électrique virtuelle suivant l'une des revendications précédentes, **caractérisée en ce que** le dispositif (3) de réglage augmente une limite GU inférieure d'état de charge au moyen d'une valeur de réserve réglée sur une installation d'accumulation d'énergie.

11. Centrale (K) électrique virtuelle suivant l'une des revendications précédentes, **caractérisée en ce que** le dispositif (3) de réglage diminue une limite GO inférieure d'état de charge au moyen d'une valeur tampon réglée sur une installation d'accumulation d'énergie.

12. Centrale (K) électrique virtuelle suivant l'une des revendications précédentes, **caractérisée en ce que** le dispositif (3) de réglage utilise un algorithme mathématique pour l'équilibrage.

13. Centrale (K) électrique virtuelle suivant l'une des revendications précédentes, **caractérisée en ce que** le dispositif (3) de réglage tient compte, pour l'équilibrage, de calculs prédictifs.

14. Centrale (K) électrique virtuelle suivant l'une des revendications précédentes, **caractérisée en ce que** le dispositif (3) de réglage tient compte, pour l'équilibrage, de courbes d'utilisation de puissance, en fonction du temps, des consommateurs électriques.

15. Procédé pour faire fonctionner une centrale (K) électrique virtuelle pour tamponner de la puissance électrique, notamment de la puissance de réglage pour des consommateurs électriques, ayant une pluralité d'installations (S1...Sn) d'accumulation d'énergie électrique réparties dans l'espace, qui sont connectées électriquement les unes aux autres, au moyen d'un réseau (KN) électrique de centrale, dans lequel il est ménagé un dispositif (3) de mesure pour relever les états (SOC) de charge de toutes les installations (ST1) d'accumulation d'énergie pour un dispositif (3) de réglage, afin de régler tous les états de charge entre une limite GU inférieure d'état de charge et une limite GO supérieure d'état de charge, le réglage (ST2) de tous les états de charge étant effectué au moyen d'une comparaison de charges, des charges électriques de compensation étant, au moyen d'un équilibrage, transportées d'installations d'accumulation d'énergie à état de charge relativement haut à des installations d'accumulation d'énergie à état de charge relativement bas, au moyen du réseau (KN) électrique de centrale,
**caractérisé en ce que**
le dispositif (3) de réglage effectue un équilibrage entre des installations (S1...Sn) d'accumulation d'énergie au moyen de lignes (Li-j), qui, avant cet équilibrage, ont été chargées relativement peu, dans lequel on établit, pour les lignes utilisables, un rang en ce qui concerne leur charge en cours ou des charges de compensation à transporter en cours, dans lequel on utilise d'abord les lignes le moins chargées pour des transports de puissance d'équilibrage.

16. Procédé suivant la revendication 15, **caractérisé en ce que** le dispositif (1) de mesure, comme dispositif (3) de réglage, est prévu supplémentairement pour relever les charges de compensation, qui sont transportées au moyen des lignes (Li-j) du réseau (KN) électrique de centrale reliant électriquement entre elles par paire des installations (S1...Sn) d'accumulation d'énergie.

17. Procédé suivant la revendication 15 ou 16, **caractérisé en ce que** la puissance de compensation représente par ligne (Li-j) du réseau (KN) électrique de centrale au maximum 15%, notamment au maximum 5%, de la puissance maximum respective de la ligne (Li-j).

18. Procédé suivant la revendication 15, 16 ou 17, **caractérisé en ce que** la puissance de compensation transportée par des charges de compensation représente par ligne (Li-j) du réseau (KN) électrique de centrale au maximum 15%, notamment au maximum 5%, de la puissance maximum respective de l'installation d'accumulation d'énergie.

19. Procédé suivant l'une des revendications 15 à 18 précédentes, **caractérisé en ce que** le dispositif (3) de réglage règle en continu une puissance maximum d'accumulation de toutes les installations (S1...Sn) d'accumulation d'énergie.

20. Procédé suivant l'une des revendications 15 à 19 précédentes, **caractérisé en ce que** le dispositif (3) de réglage empêche, pour toutes les installations (S1...Sn) d'accumulation d'énergie, d'avoir des parties d'état de charge critique, notamment des parties d'état de charge accélérant un vieillissement.

21. Procédé suivant l'une des revendications 15 à 20 précédentes, **caractérisé en ce que** le dispositif (1) de mesure et le dispositif (3) de réglage sont constitués sous la forme d'un système cloud.

22. Procédé suivant l'une des revendications 15 à 21 précédentes, **caractérisé en ce que** chaque installation (S1...Sn) d'accumulation d'énergie est associée à un consommateur électrique, auquel le dispositif (3) de réglage envoie, sous la forme d'une somme, l'énergie cédée en fait à la décharge par l'installation d'accumulation d'énergie.

23. Procédé suivant l'une des revendications 15 à 22 précédentes, **caractérisé en ce que** le dispositif (1) de mesure est prévu supplémentairement pour relever la quantité d'énergie, cédée en tout lors de l'équilibrage, de chaque installation (S1...Sn) d'accumulation d'énergie.

24. Procédé suivant l'une des revendications précédentes 15 à 23 précédentes, **caractérisé en ce que** le dispositif (3) de réglage élève la limite GU inférieure d'état de charge au moyen d'une valeur de réserve.

25. Procédé suivant l'une des revendications 15 à 24 précédentes, **caractérisé en ce que** le dispositif (3) de réglage abaisse la limite GO supérieure d'état de charge au moyen d'une valeur tampon.

26. Procédé suivant l'une des revendications 15 à 25 précédentes, **caractérisé en ce que** le dispositif (3) de réglage utilise un algorithme mathématique pour l'équilibrage.

27. Procédé suivant l'une des revendications 15 à 26 précédentes, **caractérisé en ce que** le dispositif (3) de réglage tient compte, pour l'équilibrage, de calculs prédictifs.

28. Procédé suivant l'une des revendications 15 à 27 précédentes, **caractérisé en ce que** le dispositif (3) de réglage tient compte, pour l'équilibrage, de courbes d'utilisation de puissance, en fonction du temps, des consommateurs électriques.
